Europäisches Patentamt

European Patent Office

Office européen des brevets

(19)

(11) Numéro de publication: **0 026 125 B1**

(12) **FASCICULE DE BREVET EUROPEEN**

(45) Date de publication du fascicule du brevet:
16.03.83

(51) Int. Cl.³: **C 13 L 1/06, C 12 N 1/14**

(21) Numéro de dépôt: **80401264.9**

(22) Date de dépôt: **04.09.80**

(54) **Procédé de trempage du maïs, produits ainsi obtenus et leur application à la fabrication de la pénicilline.**

(30) Priorité: **04.09.79 FR 7922106**

(43) Date de publication de la demande:
**01.04.81 Bulletin 81/13**

(45) Mention de la délivrance du brevet:
**16.03.83 Bulletin 83/11**

(84) Etats contractants désignés:
**BE DE FR GB IT NL**

(56) Documents cités:
**GB-A-1 238 725**
**US-A-2 232 555**

«Die Stärke», vol. 27, N° 3, 1975, M. El Marsafy *et al.* «Evaluation of various brands of corn steep liquor for penicillin production», p. 91-93.
«Die Stärke», vol. 27, N° 12, 1975, Hani M. El-Saied *et al.* «Amino acid patterns of different brands of corn steep liquor», p. 413-416.
«Die Stärke», vol. 31, N° 3, 1979, M. Roushdi *et al.* «Factors improving the steeping process of corn grains», p. 78-81.

(73) Titulaire: **Roquette Frères, F-62136 Lestrem (FR)**

(72) Inventeur: **Devos, Francis, Route de Merville, Morbecque F-59660 Merville (FR)**
Inventeur: **Beuque, Patrick, Au Bercail Joyeux 65, rue de Verdun, F-59249 Aubers (FR)**
Inventeur: **Huchette, Michel, 63, rue du Maréchal Joffre, F-59660 Merville (FR)**

(74) Mandataire: **Koch, Gustave et al, Cabinet PLASSERAUD 84, rue d'Amsterdam, F-75009 Paris (FR)**

Procédé de trempage du maïs, produits ainsi obtenus et leur application à la fabrication de la pénicilline.

L'invention a pour objet un procédé de trempage du maïs.

Elle vise également les produits, à savoir les eaux de trempage, présentant les caractéristiques de ceux obtenus par mise en œuvre de ce procédé, ainsi que leur application à la fabrication de la pénicilline; les eaux de trempage sont fréquemment désignées par l'homme de l'art par Corn-Steep, expression qui sera utilisée dans la suite du texte.

Le trempage ou trempe du maïs dans l'eau constitue la première étape de l'extraction de l'amidon en amidonnerie humide. Cette trempe permet le gonflement des grains de maïs et l'élimination de matières solubles hautement fermentescibles contenues dans ces grains.

Elle consiste à maintenir le maïs placé dans des silos pendant un temps donné (temps de trempe) au sein d'une eau chaude contenant une faible quantité d'anhydride sulfureux. Dans la pratique, les silos sont disposés en série et l'eau de trempe les parcourt les uns après les autres, un silo donné étant vidé lorsque le maïs qu'il contient a été maintenu au contact de l'eau de trempe pendant le temps donné susmentionné.

Plus particulièrement, l'eau de trempe est introduite en continu successivement sur chacun des silos de la série de façon telle que chaque silo reçoive en fait une partie aliquote de cette eau; chaque partie aliquote est par conséquent amenée à parcourir toute la série de silos, depuis celui sur lequel elle est introduite au départ et dont la charge de maïs est vidée à la fin de l'introduction de la partie aliquote correspondante, la trempe étant terminée pour ce chargement, jusqu'au silo situé à l'autre extrémité de la série et qui vient de recevoir un chargement de maïs frais.

Deux phénomènes essentiels se déroulent simultanément au cours de la trempe: le premier consiste en une diffusion des matières solubles du grain de maïs vers l'eau de trempe, alors que le deuxième consiste en une fermentation de ces matières solubles dans l'eau de trempe.

Cette fermentation est une fermentation lactique; en effet, les conditions de trempe ($SO_2$, température, sucres réducteurs présents et autres) favorisent le développement des bactéries lactiques qui prolifèrent très rapidement et éliminent les autres micro-organismes. Le Corn-Steep est donc le produit résultant d'une diffusion et d'une fermentation simultanées des solubles du maïs.

Un paramètre important du processus de trempe est constitué par le temps de contact de la phase liquide avec le maïs; ce temps est réglé par ce qu'on appelle le taux de circulation de l'eau, c'est-à-dire par la quantité d'eau mise en œuvre par unité de masse de maïs traité; dans la pratique industrielle, le taux de circulation se définit par le volume d'eau en mètres cubes par tonne de maïs commercial.

Cela étant, chaque amidonnerie a son procédé de trempage et ses paramètres propres (temps de trempe, taux de circulation, taux de $SO_2$, température, etc.). Il s'ensuit que la qualité des Corn-Steeps obtenus et présents sur le marché est très variable d'un amidonnier à l'autre.

Mais de plus, en raison des phénomènes physiques et biochimiques très complexes qui se déroulent au cours de la trempe, phénomènes très sensibles aux moindres variations des paramètres précités, on constate des variations très importantes dans la qualité d'un Corn-Steep produit dans une même amidonnerie au cours d'une longue période (six mois par exemple). Ces variations sont observées à propos de la coloration de la viscosité, de la stabilité au stockage, de la teneur en substances réductrices, mais également et surtout de la proportion de certains aminoacides libres tels que lysine, tyrosine, histidine, acide aspartique, et de certaines vitamines du groupe B.

Or, le Corn-Steep est utilisé comme source de matières nutritives dans l'industrie de fermentation, et en particulier dans la production de pénicilline, car il est peu onéreux, disponible en grandes quantités, et présente un excellent équilibre en la plupart des facteurs essentiels; l'acide lactique constitue une source de carbone facilement assimilable, les aminoacides et les polypeptides constituent non seulement une source d'azote et de carbone, mais également des agents tampons et les cendres constituent une source d'éléments minéraux dont ont besoin les micro-organismes.

Il se trouve que la variation de la qualité des Corn-Steeps se trouvant sur le marché, et notamment de leur teneur en lysine dont la présence n'est pas favorable à la formation de la pénicilline, se traduit par des variations indésirables importantes dans les rendements de la production des antibiotiques.

Or, pour pouvoir bénéficier, dans la production de ces antibiotiques, de tous les progrès de la biochimie industrielle moderne (améliorations génétiques, ajustement des conditions de pH ou de milieu de culture), il importe que la composition du milieu de culture — et par suite de tous ses constituants — soit la plus constante possible. Les variations de composition soudaines, brutales et inexpliquées du Corn-Steep ont ainsi parfois détourné les industries biochimiques de cette matière première au profit d'un remplacement partiel du Corn-Steep par d'autres substrats, tels que par exemple les protéines de soja et les levures.

Les procédés de trempe classiques, dont les paramètres sont les suivants:
— temps de trempe de 40 h environ,
— température de trempe comprise entre 45 et 52°C,
— taux d'anhydride sulfureux de 0,75 à 3 g/l d'eau environ,
— taux de circulation d'eau comprise entre 1,3 et 2,0 m³ d'eau par tonne de maïs commercial, donnant en sortie de trempe une concentration en solubles de 4 à 8%,
favorisent au maximum le gonflement du maïs et la diffusion rapide des matières solubles, mais ne permettent pas le développement optimal de la fermentation lactique qui se produit au cours de la trempe et qui est déterminante pour la composition finale du Corn-Steep.

Afin de favoriser cette fermentation lactique, on a déjà proposé deux solutions.

La première consiste en une incubation complémentaire, l'eau de trempe à 6-8% de matière sèche étant envoyée dans une cuve de stockage, où elle séjourne entre 8 et 24 h avant d'être évaporée. Ce temps de séjour permet un épuisement plus poussé des matières solubles par les bactéries lactiques.

La deuxième consiste en un ensemencement de la trempe à l'aide de bactéries lactiques, ce qui aurait pour effet une réduction du temps de trempage; la température de la trempe est comprise entre 45 et 50° C, et le taux de circulation d'eau retenu est de 1,4 à 1,8 m³ d'eau par tonne de maïs commercial.

Aucune de ces solutions n'a donné de résultats entièrement satisfaisants.

L'invention a donc pour but, surtout, de remédier aux inconvénients de l'art antérieur et de fournir un procédé de trempage du maïs favorisant au maximum la fermentation lactique et conduisant à un Corn-Steep de qualité constante présentant, en sortie de trempe, une concentration élevée en matières sèches, une absence presque totale de sucres réducteurs, et une composition extrêmement régulière, caractérisée par une teneur très faible en lysine, histidine, arginine, acide aspartique et tyrosine libres, le Corn-Steep obtenu étant tout particulièrement adapté à la production de pénicilline.

Le procédé de trempage conforme à l'invention est caractérisé par le fait:

— non seulement que la température de l'eau de trempe décroît de silo en silo entre, d'une part, celui sur lequel elle est introduite et, d'autre part, celui à la sortie duquel on récupère le Corn-Steep, c'est-à-dire les eaux ayant parcouru toute la série des silos, la décroissance de la température se faisant d'une valeur d'au plus 58° C dans le silo d'entrée à 32° C dans le silo de sortie,

— mais encore que le taux de circulation est compris entre 0,8 et 1,2 m³ par tonne de maïs commercial, de préférence entre 0,9 et 1,1 m³.

Suivant un mode de réalisation avantageux du susdit procédé, la température des eaux de trempe décroît de préférence d'une valeur comprise entre 52 et 56° C, notamment de 55° C, dans le silo d'entrée, à une valeur comprise entre 33 et 37° C, notamment de 35° C, dans le silo de sortie.

Le Corn-Steep conforme à l'invention est caractérisé par le fait qu'il présente:

— une teneur en lysine-ornithine libre inférieure à 200 mg/100 g de Corn-Steep sec,

— de préférence, une teneur en sucres réducteurs inférieure à 0,2 g (exprimé en glucose) par 100 g de Corn-Steep sec, et

— plus préférentiellement encore, une teneur en matières sèches, avant concentration, supérieure à 8%.

Mis à part les susdites dispositions, l'invention vise encore d'autres dispositions qui s'utilisent de préférence en même temps et dont il sera plus explicitement question ci-après.

Elle pourra, de toute façon, être bien comprise à l'aide du complément de description qui suit et des exemples annexés, lesdits compléments de description et exemples étant relatifs à des modes de réalisation avantageux.

Se proposant donc de procéder au trempage du maïs, on s'y prend comme suit ou de façon équivalente.

On met le maïs commercial en grains, disposé dans des silos arrangés en série, au contact d'une eau de trempage contenant de l'ordre de 2,5 g de $SO_2$/l.

La température de l'eau de trempage décroît de silo en silo au fur et à mesure qu'elle les parcourt l'un après l'autre, depuis celui sur lequel cette eau est introduite jusqu'à celui, situé à l'autre extrémité de la série, à la sortie duquel on récupère le Corn-Steep.

L'eau sulfitée fraîche est introduite successivement sur chacun des silos de la série, étant entendu que cette eau est habituellement constituée par ce qu'on désigne dans le métier par l'expression eaux de retour d'amidonnerie, à laquelle on ajoute l'anhydride sulfureux.

La température de l'eau sulfitée à son introduction est d'au plus environ 58° C, de préférence comprise entre 52 et 56° C. Cette température décroît de silo en silo pour arriver dans le dernier silo, à la sortie duquel elle est récupérée sous forme de Corn-Steep, à une valeur qui peut descendre jusqu'à environ 32° C, mais qui, de préférence, est comprise entre 33 et 37° C.

Pour faire en sorte que le Corn-Steep obtenu à l'issue du trempage réponde aux buts recherchés par l'invention, il convient non seulement d'avoir recours au profil de température décroissant qui vient d'être défini, mais encore de choisir un taux de circulation de l'ordre de 0,8 à 1,2 m³ par tonne de maïs, de préférence de 0,9 à 1,1 m³.

Compte tenu, par ailleurs, du fait que le temps de contact de la phase liquide et du maïs mis à tremper doit être d'au moins 38 h, de préférence d'au moins 40 h, on est amené à choisir un temps de trempe compris entre 24 et 44 h environ.

Pour un taux de circulation d'environ 1 m³, le temps de trempe pourra être avantageusement d'environ 35 à 40 h.

L'eau de trempe obtenue a ainsi subi une fermentation suffisamment longue et se trouve convenablement épuisée en sucres réducteurs et en lysine libre.

Ce résultat est obtenu en particulier grâce à l'augmentation du temps de fermentation qui se produit au sein de la phase liquide et dont la durée se trouve accrue par suite de la diminution du taux de circulation.

D'un point de vue général, le Corn-Steep conforme à l'invention, et obtenu notamment à l'aide du procédé conforme à l'invention, présente:

— une teneur en lysine-ornithine libre inférieure à 200 mg/100 g de Corn-Steep sec,

— de préférence, une teneur en sucres réducteurs inférieure à 0,2 g (exprimé en glucose) par 100 g de Corn-Steep sec, et

— plus préférentiellement encore, une teneur en matières sèches, avant concentration, supérieure à 8%.

La teneur en les autres acides aminés est de préférence la suivante:

— arginine     <    50 mg/100 g de produit sec
— histidine    < 100 mg/100 g de produit sec
— tyrosine     < 150 mg/110 g de produit sec
— acide
     aspartique   < 150 mg/100 g de produit sec

Par rapport aux procédés de l'art antérieur, dans lesquels la température de l'eau de trempage est la même dans tous les silos de la batterie et dans lesquels le taux de circulation est nettement plus élevé, le procédé conforme à l'invention non seulement fournit un Corn-Steep de qualité non plus variable, mais au contraire constante et particulièrement appropriée à la fabrication de la pénicilline, mais, de plus, présente d'autres avantages importants.

Ainsi, la réduction du taux de circulation d'eau permet une élévation importante de la concentration des eaux de trempe, ce qui entraîne de notables économies d'énergie lors de la concentration du Corn-Steep jusqu'à 50% de matières sèches. La concentration en sortie de trempe de 4 à 8% environ dans les procédés conventionnels passe ainsi en effet de 8 à 13% environ dans le procédé selon l'invention. En prenant pour hypothèses un taux d'hydratation de 44 à 48% pour le maïs en fin de trempe et une teneur en matières solubles de 6% dans le maïs, un gain d'environ 400 à 500 l d'eau à évaporer par tonne de maïs commercial peut ainsi être réalisé en diminuant le taux de circulation de 1,5 (procédés classiques) à 1,0 m³/t (procédé selon l'invention).

Un autre avantage résulte de l'économie d'énergie réalisée grâce au fait que la température décroît du premier au dernier silo considérés à un moment donné.

En effet, dans les procédés classiques, la température étant la même, de l'ordre de 48-50° C, dans tous les silos, il est nécessaire de réchauffer non seulement les eaux de trempe fraîches, mais encore les silos fraîchement mis en trmepe, pour les amener à cette température de 48 à 50° C, le maïs mis en trempe étant à une température de 10 à 20° C environ: de plus, il faut maintenir cette température dans les silos intermédiaires.

Il est vrai que le maintien d'une température uniforme sur tous les silos de la batterie est favorable à la croissance des bactéries lactiques; mais il favorise par ailleurs le phénomène de diffusion des matières solubles hautement fermentescibles en début de trempe du maïs. Celles-ci diffusent donc trop rapidement à partir du maïs frais mis en trempe.

Le profil de température conforme à l'invention d'au plus 58° C dans le silo d'entrée à 32° C dans le silo de sortie, de préférence d'une valeur comprise entre 52 et 56° C, notamment de 55° C dans le silo d'entrée à une valeur comprise entre 33 et 37° C, notamment de 35° C dans le silo de sortie, permet d'obtenir un bien meilleur équilibre entre les deux phénomènes essentiels de diffusion et de fermentation. Ce gradient de température particulier présente en outre l'avantage d'être obtenu de façon très simple et naturelle, par simple équilibre thermique entre le maïs rentrant à température ordinaire et l'eau sulfitée à 55-58° C circulant à contre-courant.

Les deux caractéristiques conjointes du procédé conforme à l'invention, c'est-à-dire le taux de circulation d'eau réduit et le profil de température particulier, permettent ainsi, en plus d'une disparition quasi totale des sucres réducteurs transformés en acide lactique (assurant de ce fait une excellente stabilité au stockage du Corn-Steep évaporé), un épuisement maximal en certains aminoacides essentiels à la croissance de la flore lactique de la trempe, en l'occurence la lysine, l'histidine, l'arginine, l'acide aspartique et la tyrosine.

Le Corn-Steep conforme à l'invention, en dehors du fait qu'il est obtenu à une concentration plus élevée avant évaporation et qu'il présente une absence presque totale de sucres réducteurs et donc une excellente stabilité, est donc tout particulièrement adapté à la fabrication de pénicilline.

Ce Corn-Steep est peptonisé au maximum (rapport azote aminé/azote total élevé) et donc très facilement assimilable par les microorganismes.

Pour illustrer ce qui précède, on indique ci-après quelques exemples d'application du procédé selon l'invention et l'on donne quelques compositions du Corn-Steep obtenu selon ce procédé.

*Exemple 1:*

Afin d'étudier l'influence des principaux paramètres opératoires, des essais de trempage du maïs ont été effectués pendant plusieurs mois sur une batterie de silos expérimentale.

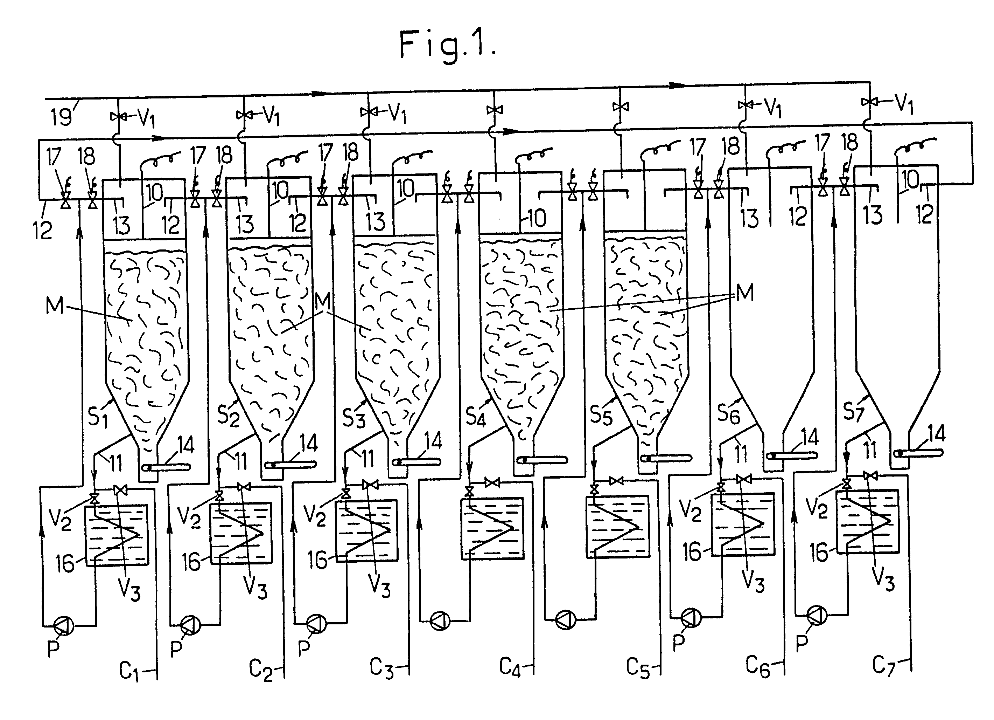

Cette batterie comporte, comme montré fig. 1:
— sept silos S₁ à S₇ en inox, à fond filtrant, de 33 l de volume total et de diamètre égal à 25 cm, pouvant être remplis de maïs M et équipés chacun:
    — d'une sonde de niveau 10,
    — d'une tuyauterie 11 reliant le fond d'un silo donné, d'une part, à la tête du silo suivant par une canalisation 12 et, d'autre part, à la tête du silo lui-même par une canalisation 13 assurant la recirculation de la phase liquide sur le silo lui-même ou vers le silo suivant, cette tuyauterie servant également à soutirer l'eau de trempe le moment voulu,
    — d'une vanne de fond 14 à grand diamètre pour la vidange du maïs,
— sept bains-marie 16 thermorégulés avec autant de pompes de circulation P assurant la circulation de la phase liquide d'un silo donné à travers le serpentin de chauffe vers le silo suivant ou vers la tête du silo considéré,
— sept jeux de deux électrovannes 17 et 18 placées respectivement sur les tuyauteries 12 et 13 et commandées par la sonde de niveau (assurant un recouvrement parfait du maïs et le déplacement du liquide tout au long de la batterie),

— une canalisation 19 d'arrivée d'eau sulfitée, ajustée à 1,5 g/l d'anhydride sulfureux, à partir de laquelle l'eau sulfitée est distribuée à un débit constant, assurant un taux de circulation (litres d'eau par kilo de maïs) constant, successivement sur chaque silo, par l'ouverture de la vanne correspondante $V_1$,

— une cuve non montrée de 20 l réceptionnant l'eau de trempe des silos avant écrasage du maïs et reliée à chacun des silos par respectivement les canalisations $C_1$ à $C_7$ dérivées sur les canalisations 11 de chaque silo, l'orientation de l'eau de trempe sortant d'un silo donné vers la tuyauterie 11 ou la canalisation C étant assurée à l'aide d'une vanne respectivement $V_2$ et $V_3$,

— un évaporateur non montré (du type commercialisé par Kurt Herbert Apparate- und Maschinenbau Lahr, Baden).

Chaque jour, l'eau de trempe recueillie est évaporée à 50% de matières sèches à l'aide de cet évaporateur sous vide, à une température inférieure à 60°C.

Dans cette première expérimentation a été déterminée l'influence du taux de circulation d'eau.

Le maïs travaillé est du maïs français, provenant de la récolte 1978 du Sud-Ouest de la France. Le temps de trempe choisi est de 40 h et le taux de $SO_2$ est fixé à 1,5 g/l.

La température est fixée à 48°C $\pm$ 1°C tout au long de la batterie. Le temps de 40 h est obtenu pour un travail sur cinq silos avec une vidange toutes les 8 h.

Le taux de circulation d'eau a progressivement été élevé de 0,8 à 1,0-1,5 et 1,8 l d'eau par kilo de maïs commercial.

La concentration en matières solubles, exprimée en grammes/litres, a été mesurée sur la sortie d'eau de trempe. L'activité bactérienne relative (RBA) a également été déterminée, d'après la méthode décrite dans l'article de S.A. Watson, Y. Hirata et C. B. Williams paru dans «Cereal Chemistry», septembre 1955, vol. 32, p. 383.

Le tableau I présente les résultats obtenus sur l'eau de trempe, en fonction des différents taux de circulation expérimentés.

*Tableau I*

| Taux de circulation (l/kg maïs) | 0,8 | 1,0 | 1,5 | 1,8 |
|---|---|---|---|---|
| Concentration de la sortie eau de trempe (g/l) | 125 | 110 | 75 | 55 |
| RBA | 900 | 600 | 450 | 200 |

On peut constater que la concentration de l'eau de trempe et que l'activité bactérienne relative diminuent au fur et à mesure que le taux de circulation augmente.

L'influence de $SO_2$, maintenu à un taux constant égal à 1,5 g/l, se fait en effet sentir de plus en plus profondément dans la trempe à mesure qu'augmente le taux de circulation, et le temps de séjour moyen de la phase liquide externe au grain de maïs diminue corrélativement. La zone de fermentation est ainsi de plus en plus défavorisée.

Une analyse chimique des Corn-Steeps évaporés à 50% de matières sèches a également été effectuée. Le tableau II résume les résultats obtenus.

*Tableau II*

| Taux de circulation (l/kg maïs) | 0,8 | 1,0 | 1,5 | 1,8 |
|---|---|---|---|---|
| Matière sèche | 50 | 50 | 50 | 50 |
| pH | 4,2 | 4,2 | 4,25 | 4,30 |
| Acidité (g d'acide lactique/100 g secs) | 22,2 | 23,0 | 22,0 | 20,0 |
| Sucres réducteurs (g de glucose/100 g secs) | traces | 0,5 | 2,7 | 5,8 |
| Protéines N × 6,25 (g/100 g secs) | 42,0 | 41,8 | 42,3 | 41,8 |
| Coloration | pâle | pâle | coloré | très coloré |
| Viscosité | visqueux | visqueux | fluide | très fluide |
| Stabilité au stockage | très stable | très stable | début de fermentation | abondante fermentation alcoolique |

Cette analyse a été complétée par l'analyse des aminoacides, effectuée après dilution et filtration de l'eau de trempe (voir tableau III).

*Tableau III*

| Aminoacides libres | Teneur en mg/100 g de matières sèches pour | | | |
|---|---|---|---|---|
| | 0,8 l/kg | 1 l/kg | 1,5 l/kg | 1,8 l/kg |
| Lysine + ornithine | 125 | 637 | 762 | 980 |
| Histidine | 40 | 43 | 180 | 470 |
| Arginine | 85 | 130 | 980 | 1580 |
| Acide aspartique | 105 | 150 | 560 | 980 |
| Thréonine | 935 | 967 | 1000 | 1150 |
| Sérine | 895 | 643 | 740 | 1000 |
| Acide glutamique | 310 | 1570 | 1500 | 1470 |
| Proline | 1125 | 1548 | 1230 | 1080 |
| Glycine | 770 | 540 | 610 | 550 |
| Alanine | 2250 | 2575 | 2100 | 1855 |
| Cystine | — | — | — | — |
| Valine | 1060 | 1280 | 1160 | 1000 |
| Méthionine | 330 | 453 | 448 | 560 |
| Isoleucine | 540 | 482 | 470 | 490 |
| Leucine | 1770 | 1730 | 1840 | 2050 |
| Tyrosine | 0 | 50 | 380 | 530 |
| Phénylalanine | 415 | 730 | 750 | 840 |

Ces analyses montrent combien, à partir d'un même maïs, les conditions de trempage retenues peuvent faire varier considérablement la composition des Corn-Steeps obtenus.

On peut constater que les conditions de trempe généralement admises en amidonnerie humide, c'est-à-dire un profil de température linéaire de 48-50° C et un taux de circulation de 1,4 à 1,6 m³ d'eau par tonne de maïs commercial, conduisent à la production d'un Corn-Steep incomplètement fermenté, caractérisé par la présence de sucres réducteurs et, par voie de conséquence, par une grande instabilité au stockage.

On constatera, d'autre part, que la composition en aminoacides libres du Corn-Steep, provenant de la même qualité de maïs travaillée, présente de grandes variations en fonction du taux de circulation d'eau. Ces variations sont surtout sensibles sur la lysine, l'histidine, l'arginine, l'acide aspartique et la tyrosine, dont la teneur augmente au fur et à mesure que la fermentation lactique se trouve défavorisée par une circulation d'eau plus importante.

Le taux de lysine libre (incluant la teneur en ornithine) passe ainsi de 125 mg/100 g à 980 mg/100 g en augmentant le taux de circulation de 0,8 à 1,8 l d'eau par kilo de maïs commercial.

*Exemple 2:*

Dans cet exemple, on étudie l'influence du profil de température.

L'expérimentation est conduite sur le même appareillage que celui de l'exemple 1 et avec la même qualité de maïs.

Pour un temps de trempe de 40 h, un taux de circulation d'eau de 1,0 l/kg de maïs et pour une concentration en $SO_2$ de 1,5 g/l, trois essais sont effectués avec des profils de température différents:

— 54° C tout au long de la trempe,
— 48° C tout au long de la trempe,
— 55° C, 50° C, 48° C et 35° C sur les cinq silos en service, à partir du silo recevant l'eau sulfitée fraîche.

Le tableau IV indique les matières sèches et la RBA mesurées dans ces conditions sur le Corn-Steep en sortie de trempe.

*Tableau IV*

| Température (°C) | 54° | 48° | 55°→35° |
|---|---|---|---|
| Concentration de l'eau de trempe (g/l) | 110 | 110 | 115 |
| RBA | 300 | 600 | 1100 |

La fermentation est donc très fortement favorisée par le profil de température descendant de 55 à 35° C.

Cela est confirmé par les analyses présentées dans le tableau V, où l'on remarque essentiellement une absence presque totale de sucres réducteurs dans le Corn-Steep obtenu à l'aide du procédé selon l'invention.

*(Tableau en page suivante)*

A température élevée, les matières solubles du maïs diffusent très rapidement. Le phénomène s'atténue légèrement à 48° C et, dans le cas du profil de température descendant, la diffusion s'effectue progressivement, entretenant ainsi une zone de fermentation très importante.

A 54° C, la température est trop élevée pour une croissance optimale des bactéries lactiques et l'ac-

*Tableau V*

| Température (°C) | 54° | 48° | 55°→35° |
|---|---|---|---|
| Matière sèche | 50 | 50 | 50 |
| pH | 4,3 | 4,2 | 4,0 |
| Acidité (g d'acide lactique/100 g secs) | 18,0 | 23,2 | 23,5 |
| Sucres réducteurs (g de glucose/100 g secs) | 8,0 | 1,0 | traces |
| Protéines N×6,25 (g/100 g secs) | 41,5 | 42,0 | 42,5 |
| Coloration | coloré | pâle | pâle |
| Viscosité | fluide | visqueux | très visqueux |
| Stabilité au stockage | abondante fermentation alcoolique | très stable | très stable |

tivité bactérienne est donc très médiocre. Celle-ci s'améliore à 48° C et devient maximale pour le profil de température descendant. Dans ce dernier cas, en raison de l'absence presque totale de sucres réducteurs en fin de zone de fermentation, des levures ne peuvent apparaître et la stabilité est donc excellente.

A profil de température descendant, la diffusion des matières solubles, très progressive en début de trempe, alimente donc continuellement la fermentation lactique, ce qui entraîne une diminution presque totale des sucres réducteurs ainsi qu'un épuisement maximal en lysine, histidine, arginine, acide aspartique et tyrosine, comme l'indique l'analyse des acides aminés libres présentée dans le tableau VI.

*Tableau VI*

| Aminoacides libres | Teneur en mg/100 g de matières sèches pour | | |
|---|---|---|---|
| | 54°C | 48°C | 55°C↘35°C |
| Lysine + ornithine | 865 | 610 | 70 |
| Histidine | 330 | 50 | 0 |
| Arginine | 1010 | 140 | 0 |
| Acide aspartique | 825 | 60 | 65 |
| Thréonine | 680 | 850 | 1060 |
| Sérine | 640 | 600 | 860 |
| Acide glutamique | 950 | 1150 | 390 |
| Proline | 950 | 1530 | 1550 |
| Glycine | 410 | 540 | 560 |
| Alanine | 1195 | 2300 | 2480 |
| Cystine | — | — | — |
| Valine | 700 | 1100 | 1075 |
| Méthionine | 310 | 450 | 560 |
| Isoleucine | 390 | 480 | 580 |
| Leucine | 1360 | 1730 | 2260 |
| Tyrosine | 515 | 60 | 60 |
| Phénylalanine | 640 | 730 | 800 |

*Exemple 3:*

L'expérimentation est menée à l'échelle industrielle dans une amidonnerie où la capacité d'écrasage est d'environ 2200 t de maïs/d.

Le trempage s'effectue dans vingt-deux silos de trempe d'une capacité de 180 t de maïs chacun.

Les conditions de trempe retenues sont les suivantes:
— temps de trempe de 26 h,
— taux de $SO_2$=2,5 g/l,
— taux de circulation=1 à 1,1 m³ d'eau par tonne de maïs,

— profil de température: 55 à 35° C du premier silo recevant l'eau sulfitée fraîche, au dernier silo recevant le maïs frais.

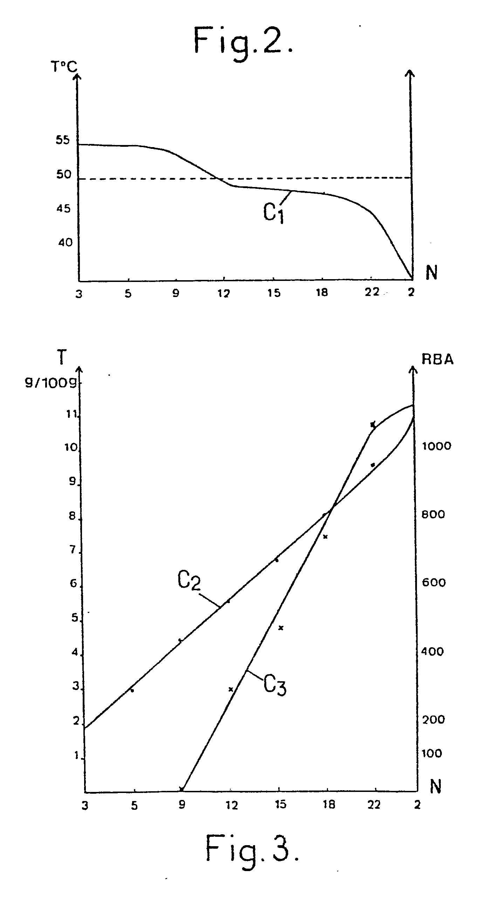

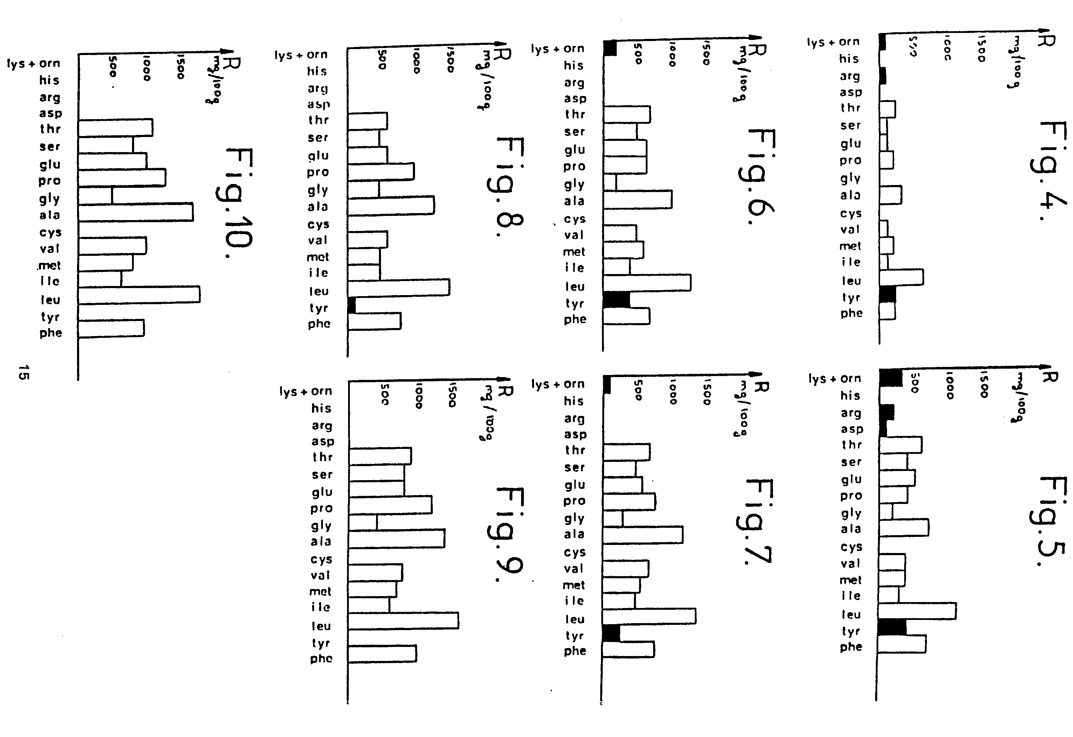

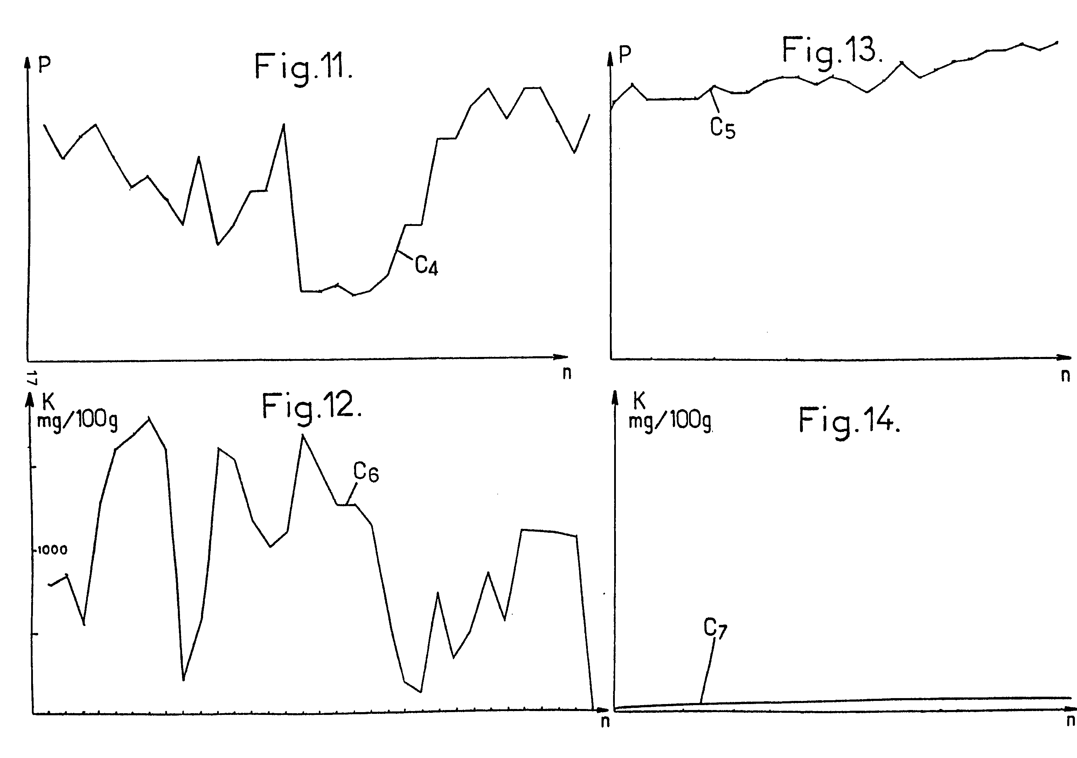

Les fig. 2 et 3 sont deux graphiques montrant, à un instant donné, respectivement l'évolution de la température (courbe $C_1$) et du taux de solubles T exprimé en grammes/100 g (courbe $C_2$) et de la RBA (courbe $C_3$) à l'intérieur des différents silos (en abscisse, on porte le numéro N de différents silos), c'est-à-dire en fonction de l'avancement de la phase liquide, remontant à contre-courant le maïs en trempe. A cet instant donné, l'eau sulfitée est alimentée sur le silo N° 3, l'eau de trempe est vidangée du silo N° 2 et le maïs contenu dans le silo N° 1 part à l'écrasage.

On remarque sur le graphique de la fig. 3 une diffusion très progressive des matières solubles ainsi que la progression de l'activité bactérienne relative.

Le taux de solubles en sortie de trempe est voisin de 115 g/l.

Des analyses des aminoacides libres ont été effectuées sur les silos N° 5, N° 9, N° 12, N° 15, N° 18, N° 22 et N° 2. Les figures correspondantes 4 à 10 représentent respectivement les aminogrammes relatifs à l'eau de trempe contenue dans ces différents silos, et on remarquera en particulier la composition en lysine, histidine, arginine, acide aspartique et tyrosine. Sur l'aminogramme de chaque figure, on a représenté, exprimée en milligrammes par 100 g de produit sec, la teneur R de l'eau de trempe de chacun de ces silos en les différents acides aminés.

On peut constater qu'après une certaine accumulation dans la zone de diffusion, ces aminoacides disparaissent progressivement dans la zone de fermentation.

Ces conditions de trempe ont été maintenues constantes durant une période de vingt semaines. La constance des paramètres est aisément obtenue en contrôlant le taux de circulation d'eau et en le maintenant entre 1,0 et 1,1, et la température est celle qui est naturellement obtenue dans ce procédé de trempage à contre-courant où l'eau de fabrication est alimentée à 55° C environ et où le silo recevant le maïs est maintenu à une température de 35° C.

Des échantillons de Corn-Steep ont été analysés chaque semaine. Les tableaux VII et VIII présentent respectivement la composition chimique et l'analyse des acides aminés libres des Corn-Steeps obtenus.

On peut constater, à l'examen de ces tableaux, que les Corn-Steeps fabriqués suivant le procédé selon l'invention présentent une composition extrêmement régulière, caractérisée par une absence presque totale en sucres réducteurs et par une très faible teneur en lysine, histidine, arginine, acide aspartique et tyrosine. Cette composition n'a pas varié, que le maïs travaillé soit d'origine française ou américaine.

Les Corn-Steeps ainsi obtenus ont été utilisés pour la fabrication de pénicilline, à la suite de Corn-Steeps fabriqués suivant les procédés de trempage conventionnels, c'est-à-dire à une température de 48° C tout au long de la trempe et à un taux de circulation d'eau de 1,4 à 1,6.

Les graphiques des fig. 11 à 14 représentent les évolutions comparatives de la teneur en lysine de ces Corn-Steeps et de la production moyenne relative en pénicilline.

Ainsi, les graphiques des fig. 11 et 13 montrent pour chaque essai n la production moyenne relative P en pénicilline exprimée en unité arbitraire, le graphique de la fig. 11 étant relatif aux Corn-Steeps fabriqués selon l'art antérieur, celui de la fig. 13 aux Corn-Steeps fabriqués selon l'invention. Les points figuratifs des divers essais sont situés sur la courbe $C_4$ en ce qui concerne le graphique de la fig. 11 et sur la courbe $C_5$ en ce qui concerne le graphique de la fig. 13.

Les graphiques des fig. 12 et 14 montrent, pour chaque essai n, la teneur K en lysine (mg/100 g) du Corn-Steep correspondant. Le graphique de la fig. 12 concerne les Corn-Steeps de l'art antérieur, celui de la fig. 14 ceux conformes à l'invention. Ici encore, les points figuratifs de chaque essai sont situés sur la courbe $C_6$ en ce qui concerne la fig. 12 et sur la courbe $C_7$ en ce qui concerne la fig. 14.

On constate, à l'examen de ces graphiques, l'existence d'une liaison étroite entre la composition en lysine libre du Corn-Steep et la production de pénicilline.

*Tableau VII*

| Semaine N° | Matière sèche | pH | Acidité (g acide lactique/ 100 g secs) | Sucres (g glucose/ 100 g secs) | Azote aminé | Azote total | Protéines N × 6,25 | Cendres | Phosphore |
|---|---|---|---|---|---|---|---|---|---|
| 1 | 50,6 | 4,0 | 22,01 | traces | 2,72 | 7,47 | 46,7 | 18,38 | 3,48 |
| 2 | 51,3 | 4,0 | 23,40 | traces | 2,67 | 7,41 | 46,3 | 18,26 | 3,47 |
| 3 | 50,5 | 4,15 | 23,10 | traces | 2,75 | 7,46 | 46,6 | 18,00 | 3,43 |
| 4 | 50,4 | 4,1 | 22,9 | traces | 2,77 | 7,10 | 44,4 | 18,43 | 3,25 |
| 5 | 50,45 | 4,2 | 23,10 | traces | 2,83 | 7,40 | 46,2 | 18,05 | 3,53 |
| 6 | 50,4 | 4,2 | 23,20 | traces | 2,74 | 7,38 | 46,2 | 18,05 | 3,53 |
| 7 | 50,5 | 4,1 | 23,12 | traces | 2,78 | 7,60 | 47,54 | 17,60 | 3,29 |
| 8 | 50,4 | 4,0 | 23,20 | traces | 2,68 | 7,54 | 47,1 | 17,50 | 3,15 |
| 9 | 50,55 | 4,0 | 23,15 | traces | 2,55 | 7,46 | 46,55 | 17,92 | 3,36 |

*Tableau VII (suite)*

| Semaine N° | Matière sèche | pH | Acidité (g acide lactique/ 100 g secs) | Sucres (g glucose/ 100 g secs) | Azote aminé | Azote total | Protéines N×6,25 | Cendres | Phosphore |
|---|---|---|---|---|---|---|---|---|---|
| 10 | 51,2 | 3,95 | 23,11 | traces | 2,57 | 7,30 | 45,7 | 18,10 | 3,50 |
| 11 | 50,7 | 4,0 | 23,80 | traces | 2,82 | 7,30 | 45,6 | 18,7 | 3,73 |
| 12 | 51,4 | 4,1 | 21,0 | traces | 2,55 | 7,23 | 45,3 | 17,8 | 3,11 |
| 13 | 52,0 | 4,05 | 23,24 | traces | 2,52 | 7,20 | 45,0 | 18,26 | 3,23 |
| 14 | 52,4 | 4,1 | 22,10 | traces | 2,50 | 7,21 | 44,8 | 18,2 | 3,24 |
| 15 | 52,6 | 4,0 | 21,73 | traces | 2,45 | 7,20 | 43,0 | 18,60 | 3,50 |
| 16 | 51,4 | 4,1 | 21,88 | traces | 2,45 | 7,28 | 45,52 | 18,87 | 3,25 |
| 17 | 51,0 | 4,0 | 22,50 | traces | 2,40 | 7,20 | 45,2 | 18,03 | 3,07 |
| 18 | 50,8 | 4,2 | 21,17 | traces | 2,64 | 7,47 | 46,68 | 18,12 | 2,90 |
| 19 | 51,1 | 4,15 | 21,83 | traces | 2,75 | 7,37 | 46,14 | 18,19 | 3,36 |
| 20 | 51,1 | 4,1 | 23,0 | traces | 2,66 | 7,26 | 45,4 | 18,4 | 3,32 |

*Tableau VIII*

| Semaine N° | Teneur en mg/100 g de matières sèches | | | | |
|---|---|---|---|---|---|
| | Acide aspartique | Tyrosine | Lysine + ornithine | Histidine | Arginine |
| 1 | 63 | traces* | 127 | traces | traces |
| 2 | 61 | traces | 156 | traces | traces |
| 3 | 0 | 81 | 121 | traces | traces |
| 4 | 40 | 80 | 80 | 20 | traces |
| 5 | 61 | 40 | 123 | 41 | traces |
| 6 | 40 | 100 | 60 | traces | traces |
| 7 | 40 | 80 | 60 | traces | traces |
| 8 | 40 | 80 | 80 | traces | traces |
| 9 | 60 | 100 | 60 | traces | traces |
| 10 | 80 | 120 | 110 | 40 | traces |
| 11 | 40 | 60 | 140 | traces | traces |
| 12 | 80 | 120 | 60 | 20 | traces |
| 13 | 80 | 100 | 120 | 20 | traces |
| 14 | 120 | 120 | 160 | 20 | traces |
| 15 | 100 | 100 | 140 | 60 | traces |
| 16 | 100 | 60 | 140 | 20 | traces |
| 17 | 60 | — | 100 | 20 | traces |
| 18 | 40 | 100 | 80 | 10 | traces |
| 19 | 20 | 40 | 60 | 20 | traces |
| 20 | 60 | 60 | 60 | 20 | traces |

* traces = 10 mg/100 g de matières sèches.

Ensuite de quoi, et quel que soit le mode de réalisation adopté, on dispose ainsi d'un procédé de trempage du maïs présentant, par rapport à ceux qui existent déjà, de nombreux avantages, dont:

— celui de fournir un Corn-Steep de composition parfaitement constante et particulièrement appropriée à la fabrication de la pénicilline,

— celui de procurer des gains appréciables sur le plan du bilan énergétique,

— celui de fournir un Corn-Steep d'excellente stabilité,

— celui de fournir un Corn-Steep peptonisé au maximum.

**Revendications**

1. Procédé de trempage du maïs, caractérisé par le fait:

— non seulement que la température de l'eau de trempe décroît de silo en silo entre, d'une part, celui sur lequel elle est introduite et, d'autre part, celui à la sortie duquel on récupère le Corn-Steep, c'est-à-dire les eaux ayant parcouru toute la série des silos, la décroissance de la température se faisant d'une valeur d'au plus 58° C dans le silo d'entrée à 32° C dans le silo de sortie,

— mais encore que le taux de circulation est compris entre 0,8 et 1,2 m³ par tonne de maïs commercial, de préférence entre 0,9 et 1,1 m³.

2. Procédé selon la revendication 1, caractérisé par le fait que la température des eaux de trempe décroît d'une valeur comprise entre 52 et 56° C, notamment de 55° C dans le silo d'entrée, à une valeur comprise entre 33 et 37° C, notamment de 35° C, dans le silo de sortie.

3. Corn-Steep, caractérisé par le fait qu'il a été obtenu par mise en œuvre du procédé selon l'une des revendications 1 ou 2 et qu'il présente:

— une teneur en lysine-ornithine libre inférieure à 200 mg/100 g de Corn-Steep sec,

— de préférence, une teneur en sucres réducteurs inférieure à 0,2 g (exprimé en glucose) par 100 g de Corn-Steep sec, et

— plus préférentiellement encore, une teneur en matières sèches, avant concentration, supérieure à 8%.

4. Corn-Steep selon la revendication 3, caractérisé par le fait qu'il présente une teneur en:

— arginine       < 50 mg/100 g de produit sec
— histidine      < 100 mg/100 g de produit sec
— tyrosine       < 150 mg/100 g de produit sec
— acide
  aspartique     < 150 mg/100 g de produit sec

5. Application du Corn-Steep selon l'une ou l'autre des revendictions 3 ou 4 à la fabrication de la pénicilline.

## Claims

1. Process for steeping corn, characterized by the fact:

— not only that the temperature of the steeping water decreases from silo to silo between, on the one hand, that into which it is introduced and, on the other hand, that at the outlet of which the corn steep liquor, that is to say the water having passed through the entire series of silos, is recovered, the decrease in temperature being effected from a value of at the most 58° C in the inlet silo to 32° C in the outlet silo,

— but also that the circulation rate is between 0.8 and 1.2 m³/t of commercial corn, preferably between 0.9 and 1.1 m³.

2. Process according to claim 1, characterized by the fact that the temperature of the steeping water decreases from a value between 52 and 56° C, in particular 55° C, in the inlet silo to a value between 33 and 37° C, in particular 35° C, in the outlet silo.

3. Corn steep liquor, characterized by the fact that it has been obtained by the use of the process according to one of claims 1 or 2 and that it has:

— a free lysine-ornithine content below 200 mg/100 g of dry corn steep,

— preferably, a reducing sugars content below 0.2 g (expressed as glucose)/100 g of dry corn steep, and

— still more preferably, a content of dry substances, before concentration, higher than 8%.

4. Corn steep liquor according to claim 3, characterized by the fact that it has a content of:

— arginine         < 50 mg/100 g of dry product
— histidine        < 100 mg/100 g of dry product
— tyrosine         < 150 mg/100 g of dry product
— aspartic acid    < 150 mg/100 g of dry product

5. Application of the corn steep liquor according to one or the other of claims 3 or 4 to the manufacture of penicillin.

## Patentansprüche

1. Verfahren zum Quellen von Mais, dadurch gekennzeichnet, dass nicht nur die Temperatur des Quellwassers von Silo zu Silo abnimmt zwischen einerseits demjenigen, bei dem es eingeführt wird und andererseits demjenigen, an dessen Ausgang man das Corn-Steep, d.h. die Wässer, die die ganze Serie der Silos durchlaufen haben, gewinnt, wobei die Temperatursenkung von einem Wert von höchstens 58° C im Eintrittssilo bis zu 32° C im Austrittssilo erfolgt, sondern dass auch der Zirkulationsgrad zwischen 0,8 und 1,2 m³/t Handelsmais, vorzugsweise zwischen 0,9 und 1,1 m³ liegt.

2. Verfahren nach Anspruch 1, dadurch gekennzeichnet, dass die Temperatur der Quellwässer von einem Wert zwischen 52 und 56° C, vorzugsweise 55° C, im Eintrittssilo bis zu einem Wert zwischen 33 und 37° C, vorzugsweise 35° C, im austrittssilo abnimmt.

3. Corn-Steep, dadurch gekennzeichnet, dass es erhalten wird durch ein Verfahren nach einem der Ansprüche 1 oder 2 und dass es aufweist einen Gehalt an freiem Lysin-Ornithin unterhalb 200 mg/100 g trockenes Corn-Steep, vorzugsweise einen Gehalt an reduzierenden Zuckern unterhalb 0,2 g (ausgedrückt in Glukose)/100 g trockenes Corn-Steep, und besonders bevorzugt einen Gehalt an Trockensubstanz vor der Konzentrierung oberhalb 8%.

4. Corn-Steep nach Anspruch 3, dadurch gekennzeichnet, dass es einen Gehalt aufweist an:

— Arginin      < 50 mg/100 g Trockensubstanz
— Histidin     < 100 mg/100 g Trockensubstanz
— Tyrosin      < 150 mg/100 g Trockensubstanz
— Asparaginsäure        < 150 mg/100 g Trockensubstanz

5. Verwendung des Corn-Steeps nach einem der beiden Ansprüche 3 oder 4 zur Herstellung von Penicillin.

Fig.1.

# Fig.2.

# Fig.3.

0 026 125

Fig. 4.

Fig. 5.

Fig. 6.

Fig. 7.

Fig. 8.

Fig. 9.

Fig. 10.

15

Fig.11.

P

C4

n

Fig.13.

P

C5

n

0 026 125

Fig.12.

K
mg/100g

1000

n

Fig.14.

K
mg/100g

C7

n